# EUROPÄISCHE PATENTSCHRIFT

(11) **EP 3 116 751 B1**
(45) Veröffentlichungstag und Bekanntmachung des Hinweises auf die Patenterteilung: **10.05.2023**
(21) Anmeldenummer: 15713646.6
(22) Anmeldetag: 13.03.2015
(51) Int. Cl.: B60Q 5/00, B60R 21/203, B60R 21/2165

(54) **VERBINDERBAUTEIL ZUR BEFESTIGUNG EINES GASSACKMODULS AN EINEM LENKRAD, SET MIT EINEM SOLCHEN VERBINDERBAUTEIL UND EINER POSITIONIERHÜLSE SOWIE LENKRAD, GASSACKMODUL, LENKRADBAUGRUPPE UND HERSTELLUNGSVERFAHREN HIERFÜR**
CONNECTOR COMPONENT FOR SECURING AN AIRBAG MODULE TO A STEERING WHEEL, SET COMPRISING SUCH A CONNECTOR COMPONENT AND A POSITIONING SLEEVE, STEERING WHEEL, AIRBAG MODULE, STEERING WHEEL ASSEMBLY, AND METHOD FOR PRODUCING SAME
ÉLÉMENT DE CONNECTEUR POUR FIXER UN MODULE DE COUSSIN À GAZ SUR UN VOLANT, ENSEMBLE COMPORTANT D'UN TEL ÉLÉMENT DE CONNECTEUR ET UN MANCHON DE POSITIONNEMENT AINSI QUE VOLANT, MODULE DE COUSSIN À GAZ, ENSEMBLE VOLANT ET PROCÉDÉ DE FABRICATION

(30) Priorität: 13.03.2014 DE 202014002194 U
(43) Veröffentlichungstag der Anmeldung: 18.01.2017
(73) Patentinhaber: Dalphi Metal España, S.A., 36213 Vigo (ES)
(72) Erfinder: COLLAZO GÓMEZ, Angel, E-36207 Vigo (ES)
(74) Vertreter: ZF Patentabteilung - DIPS
(86) Internationale Anmeldenummer: PCT/EP2015/000556
(87) Internationale Veröffentlichungsnummer: WO 2015/135657

(56) Entgegenhaltungen:
- EP-A1- 1 772 314
- WO-A1-2011/101086
- DE-A1- 1 948 615
- DE-A1-102008 023 004
- US-A- 5 350 190
- US-A1- 2001 035 631
- US-A1- 2003 151 237

## Beschreibung

Die Erfindung betrifft ein Verbinderbauteil zur Befestigung eines Gassackmoduls an einem Lenkrad gemäß dem Oberbegriff des Patentanspruchs 1.

Ein derartiges Verbinderbauteil ist bereits aus der gattungsgemäßen US 2003/0151237 A1 bekannt, wobei ein modulseitiges Teil des Verbinderbauteils durch Verrastung an einer Aufnahme der Modulabdeckung und ein lenkradseitiges Teil des Verbinderbauteils durch eine Schnappverbindung in Ausnehmungen der Lenkradnabe befestigt werden kann.

Weitere Verbinderbauteile zur Kopplung eines Gassackmoduls mit einem Lenkrad sind in den Druckschriften US 2001/0035631 A1, US 5,350,190 A, WO 2011/ 101086 A1 und DE 10 2008 023 004 A1 offenbart.

Ein aus der DE 10 2012 002 722 A1 bekanntes Verbinderbauteil umfasst mehrere Einzelkomponenten, die als Lagerteile ausgebildet sind. Dabei bilden die Lagerteile einen lenkradseitigen Teil einerseits und einen modulseitigen Teil andererseits. Das lenkradseitige Teil ist direkt mit dem Lenkradskelett gekoppelt und gegenüber dem Lenkradskelett exakt ausrichtbar. Das modulseitige Teil ist mit dem Gassackmodul verbunden und gegenüber dem Gassackmodul exakt ausrichtbar. Das modulseitige Teil und das lenkradseitige Teil sind in einem markierten Zustand gegeneinander vorgespannt, sodass das Gassackmodul in einer Ruheposition des modulseitigen Teils von dem Lenkradskelett beabstandet angeordnet ist. Gegen die Vorspannkraft ist das Gassackmodul zum Lenkradskelett hin bewegbar, wobei das modulseitige Teil und das lenkradseitige Teil des Verbinderbauteils aneinander anschlagen.

Aus der Praxis ist bekannt, separat zu dem Verbinderbauteil Hupkontakte am Gassackmodul einerseits und am Lenkrad andererseits anzuordnen. Die Hupkontakte berühren sich, wenn das Gassackmodul in der Hupposition ist. Auf diese Weise kann ein Hupenstromkreis geschlossen werden, woraufhin das Signalhorn eines Fahrzeugs ertönt.

Problematisch bei der Herstellung von Lenkradbaugruppen sind insbesondere die Anforderungen an die Toleranz hinsichtlich des Spaltmaßes zwischen Gassackmodul und Lenkrad. Das Lenkradskelett wird üblicherweise mit einer Lenkradumschäumung versehen, die mit relativ großen Toleranzen behaftet ist. Daher bestehen zwischen mehreren Lenkradbaugruppen einer Produktionseinheit Unterschiede im Spaltmaß zwischen Gassackmodul und Lenkrad. Um dies auszugleichen, ist es erforderlich, jede einzelne Lenkradbaugruppe separat auszurichten, sodass die gewünschten Toleranzen, die oft weniger als 0,5 mm oder sogar weniger als 0,1 mm betragen sollen, erreicht werden. Dies führt zu einem erheblichen Mehraufwand bei der Produktion von Lenkradbaugruppen.

Ferner ist der Aufwand zu Integration einer Hupenfunktion in die Lenkradbaugruppe vergleichsweise hoch, da die Hupenkontakte separat am Lenkrad bzw. am Gassackmodul angebracht werden. Folglich ist es für jeden Lenkradtyp, beispielsweise für unterschiedliche Fahrzeughersteller, erforderlich, das Verbinderbauteil und die Hupkontakte individuell zu konstruieren und anzuordnen.

Die Aufgabe der Erfindung besteht darin, ein Verbinderbauteil zur Befestigung eines Gassackmoduls an einem Lenkrad anzugeben, das als kompaktes Bauteil für unterschiedliche Kombinationen aus Gassackmodulen und Lenkrädern universell einsetzbar ist und insbesondere eine Führungsfunktion für das Gassackmodul sowie eine Hupfunktion vereint. Ferner besteht die Aufgabe der Erfindung darin, ein Set mit dem Verbinderbauteil und einer Positionierhülse sowie eine Verwendung des Verbinderbauteils oder des Sets anzugeben. Die Aufgabe der Erfindung besteht außerdem darin, ein Lenkrad mit einem solchen Verbinderbauteil, ein Gassackmodul mit wenigstens einem Set, eine Lenkradbaugruppe mit einem Lenkrad und einem Gassackmodul sowie ein Herstellungsverfahren anzugeben.

Erfindungsgemäß wird diese Aufgabe im Hinblick auf das Verbinderbauteil durch den Gegenstand des Patentanspruchs 1, im Hinblick auf das Set durch den Gegenstand des Patentanspruchs 9, im Hinblick auf die Verwendung durch den Gegenstand des Patentanspruchs 10, im Hinblick auf das Lenkrad durch den Gegenstand des Patentanspruchs 11, im Hinblick auf das Gassackmodul durch den Gegenstand des Patentanspruchs 12, im Hinblick auf die Lenkradbaugruppe durch den Gegenstand
des Patentanspruchs 13 und im Hinblick auf das Verfahren durch den Gegenstand des Patentanspruchs 14 gelöst.

Die Erfindung beruht auf dem Gedanken, ein Verbinderbauteil zur Befestigung eines Gassackmoduls an einem Lenkrad mit einem lenkradseitigen Teil und einem modulseitigen Teil anzugeben. Das lenkradseitige Teil und das modulseitige Teil sind zueinander beweglich und gegeneinander vorgespannt, sodass das modulseitige Teil in einer Ruheposition von einem lenkradseitigen Teil beabstandet und in einer Hupposition verschiebbar ist, in welcher das modulseitige Teil das lenkradseitige Teil berührt. Das modulseitige Teil und das lenkradseitige Teil sind miteinander verbunden und bilden ein multifunktionales Bauteil. Das multifunktionale Bauteil weist eine Führungseinrichtung zur geführten Bewegung des modulseitigen Teils von der Ruheposition in die Hupposition auf. Ferner weist das multifunktionale Bauteil elektrische Kontakte für einen Hupenstromkreis auf, wobei sich die elektrischen Kontakte in der Hupposition berühren. Erfindungsgemäß ist an dem modulseitigen Teil eine Profilnase zur Positionierung des Verbinderbauteils an einem Gassackmodul vorgesehen, wobei die Gestalt der Profilnase im Wesentlichen einem vierseitigen Prisma entspricht, bei dem an zumindest zwei der einander gegenüberliegenden Seiten die jeweilige Steigung im Bereich der Basis größer ist als im Bereich der Spitze, wobei ein freies, von dem modulseitigen Teil abgewandtes Ende der Profilnase, an dem die Seiten des vierseitigen Prismas zusammenkommen, abgerundet ist und ferner auch die Kanten zwischen den Seiten des vierseitigen Prismas abgerundet sind.

Da das modulseitige Teil und das lenkradseitige Teil miteinander verbunden sind und ein multifunktionales Bauteil bilden, ist das Verbinderbauteil insgesamt einfach handhabbar. Konkret bildet das Verbinderbauteil eine kompakte, in sich geschlossene Baugruppe. Gleichzeitig vereint das Verbinderbauteil sowohl eine Führungsfunktion zur Bewegung des Gassackmoduls von der Ruheposition in die Hupposition sowie eine Hupfunktion durch die in das Verbinderbauteil integrierten elektrischen Kontakte. Wegen des kompakten Aufbaus eignet sich das Verbinderbauteil daher zur Verbindung unterschiedlicher Gassackmodule mit unterschiedlichen Lenkrädern. Mit anderen Worten ist das Verbinderbauteil universell einsetzbar und trägt so zur Kostenreduktion bei der Produktion von Lenkradbaugruppen bei.

Bei einer bevorzugten Ausführungsform der Erfindung weist das lenkradseitige Teil ein Verankerungselement zur Fixierung in einer Lenkradumschäumung auf. Wie bereits erläutert, besteht bei bisherigen Lösungen zur Verbindung eines Gassackmoduls mit einem Lenkrad die Schwierigkeit, die Toleranzkette so klein wie möglich zu halten, um die Größe des Hupenspalts im vorgegebenen Toleranzbereich zu halten. Wegen Ungenauigkeiten bei der Umschäumung eines Lenkrads variieren einzelne Lenkräder in ihren Dimensionen voneinander, sodass bei bisherigen Lösungen ein aufwendiges Ausrichten jeder individuellen Lenkradbaugruppe notwendig ist. Indem bei dem erfindungsgemäßen Verbinderbauteil in bevorzugter

Variante ein Verankerungselement vorgesehen ist, dass sich zur Fixierung in der Lenkradumschäumung selbst eignet, werden Ungenauigkeiten bei der Umschäumung des Lenkrads nicht auf das Verbinderbauteil übertragen. Vielmehr kann das Verbinderbauteil bereits direkt in der Lenkradumschäumung ausgerichtet werden, sodass insgesamt die Toleranzkette verkürzt wird. Dies führt zu einer höheren Genauigkeit bei der Einstellung des Hupenspalts, sodass ein individuelles Ausrichten einzelner Lenkradbaugruppen vermieden wird.

Bei einer weiteren bevorzugten Variante der vorliegenden Erfindung weisen die elektrischen Kontakte für den Hupenstromkreis einen ersten Hupenkontakt und einen zweiten Hupenkontakt auf, wobei der erste Hupenkontakt am lenkradseitigen Teil und der zweite Hupenkontakt am modulseitigen Teil angeordnet sind.

Ferner kann bei der Erfindung vorgesehen sein, dass die Führungseinrichtung einen Positionierstift aufweist, der mit dem lenkradseitigen Teil einteilig ausgebildet ist und sich durch das modulseitige Teil erstreckt. Auch dies reduziert die Toleranzkette, da die Ausrichtung des Gassackmoduls unmittelbar durch den Positionierstift erfolgen kann, der über das lenkradseitige Teil einstückig in der Lenkradumschäumung fixierbar ist. Dies vermeidet eine aufwendige Konstruktion mit mehreren Lagerbuchsen, die für eine individuelle Ausrichtung jedes einzelnen Lenkrads vorgesehen sind. Vielmehr wird durch die einstückige Ausbildung des Positionierstifts mit dem lenkradseitigen Teil eine weitere Fehlertoleranzquelle vermieden, sodass das Verbinderbauteil insgesamt kompakt gestaltet ist.

Der Positionierstift kann ein Kreuzprofil aufweisen, wobei eine Profilbreite des Kreuzprofils größer als eine Profilhöhe des Kreuzprofils ist. Als Kreuzprofil wird im Rahmen der Anmeldung ein Profil angesehen, das im Querschnitt kreuzförmig ausgebildet ist, wobei sich zwei Balken in einem 90° Winkel kreuzen. Ein erster Balken bildet die Profilbreite des Kreuzprofils und ist größer als ein zweiter Balken, der die Profilhöhe des Kreuzprofils bestimmt. Die Bezeichnung der Balken dient vorliegend nur zur Erläuterung des Erscheinungsbilds des Kreuzprofils. Tatsächlich ist das Kreuzprofil vorzugsweise als Strangpressprofil ausgebildet, sodass sich keine voneinander getrennten Balken zeigen. Die Verwendung eines Kreuzprofils ermöglicht einerseits eine mobile Konstruktion des Positionierstifts und bildet andererseits Grundlage für eine gute Führungseigenschaft des Positionierstifts. Indem die Profilbreite größer als die Profilhöhe des Kreuzprofils ist, wird eine Überbestimmung vermieden. Zumindest die Profilbreite dient bei Verwendung mit einer korrespondierenden Positionierhülse zur spielfreien Führung der Positionierhülse. In Richtung der Positionierhöhe hat die Positionierhülse Spiel, sodass eine zusätzliche Ausrichtung erfolgen kann. Andererseits kann durch verdrehte Anordnung mehrerer Verbinderbauteile an einem Lenkrad eine exakte Positionierung erfolgen, da das Gassackmodul gegenüber dem Lenkrad lediglich zwei Freiheitsgrade aufweist.

Der Positionierstift erstreckt sich vorzugsweise durch ein Vorspannmittel, das in einer Spannmittelaufnahme des lenkradseitigen Teils angeordnet ist. Das Vorspannmittel kann beispielsweise eine Schraubenfeder sein, die als Druckfeder ausgebildet und in einer Federaufnahme des lenkradseitigen Teils angeordnet ist. Durch die Benutzung des innerhalb der Schraubenfeder verfügbaren Raums zur Anordnung des Positionierstifts wird eine kompakte Gestaltung des Verbinderbauteils erreicht.

Die elektrischen Kontakte, insbesondere der erste und zweite Hupenkontakt, können vorteilhafterweise zwischen Seitenwänden des modulseitigen Teils angeordnet sein. Die Seitenwände können einen Schutz für die elektrischen Kontakte bilden, sodass eine Verschmutzung der elektrischen Kontakte vermieden wird. Die elektrischen Kontakte unterliegen somit einem geringeren Verschleiß, was die Zuverlässigkeit der Hupenfunktion des Verbinderbauteils erhöht.

Die Seitenwände des modulseitigen Teils können Bestandteil der Führungseinrichtung sein bzw. der Führungseinrichtung zugeordnet sein. Mit anderen Worten kann die Führungseinrichtung die Seitenwände des modulseitigen Teils umfassen, wobei die Seitenwände das lenkradseitige Teil in der Ruheposition zumindest teilweise überlappen oder umgreifen, sodass das lenkradseitige Teil zwischen den Seitenwänden geführt ist. Die Seitenwände des modulseitigen Teils können insofern eine Doppelfunktion wahrnehmen. Einerseits können die Seitenwände die dazwischen angeordneten elektrischen Kontakte vor Verschmutzung schützen. Dieser Schutz besteht bereits in der Ruheposition des modulseitigen Teils, da die Seitenwände das lenkradseitige Teil teilweise überlappen oder umgreifen. Andererseits können die Seitenwände zur Führungsfunktion des Verbinderbauteils beitragen, indem das lenkradseitige Teil zwischen den Seitenwänden geführt ist. Die Seitenwände liegen also vorzugsweise spielfrei am lenkradseitigen Teil an, um eine lineare Bewegung des modulseitigen Teils gegenüber dem lenkradseitigen Teil zu führen.

Um das modulseitige Teil und das lenkradseitige Teil des einheitlichen Bauteils bzw. der multifunktionalen Komponenten miteinander zu verbinden, ist vorzugsweise eine Schnappverbindung vorgesehen. Konkret können das modulseitige Teil und das lenkradseitige Teil schnappverbunden sein. Dabei kann das lenkradseitige Teil Schnapphaken aufweisen, die in Schnappausnehmungen des modulseitigen Teils, insbesondere der Seitenwände des modulseitigen Teils, eingreifen. Alternativ ist auch möglich, dass das lenkradseitige Teil Schnappausnehmungen und das modulseitige Teil Schnapphaken aufweist. Schließlich sind Ausführungen denkbar, bei dem sowohl am lenkradseitigen Teil als auch am modulseitigen Teil Schnapphaken und Schnappausnehmungen angeordnet sind, die jeweils zueinander korrespondieren. Im Allgemeinen kann vorgesehen sein, dass die Schnappausnehmungen eine Höhe aufweisen, die dem Abstand des modulseitigen Teils vom lenkradseitigen Teil in der Ruheposition entsprechen. So ist sichergestellt, dass der Schnapphaken über die gesamte Verschiebehöhe des modulseitigen Teils in die Schnappausnehmung eingreift.

Ferner kann eine Positionierhülse vorgesehen sein, die mit einem Gassackmodul fest verbindbar oder in ein Gassackmodul einstückig integrierbar ist. Die Positionierhülse weist eine Innenkontur auf, die zum zumindest teilweise spielfreien Eingriff des Positionierstifts des zuvor beschriebenen Verbinderbauteils geformt und/ oder dimensioniert ist. Die Positionierhülse bildet im Wesentlichen ein korrespondierendes Bauteil zum Verbinderbauteil, insbesondere zum modulseitigen Teil des Verbinderbauteils. Die Positionierhülse kann Rastöffnungen aufweisen, in die die Rasthaken des Verbinderbauteils eingreifen, um das Verbinderbauteil formschlüssig mit der Positionierhülse zu verbinden. Die Positionierhülse kann ein separates Bauteil bilden, das mit einem Gassackmodul verbindbar ist. Es ist auch möglich, dass die Positionierhülse einstückig mit dem Gassackmodul ausgebildet ist. Jedenfalls ist bevorzugt vorgesehen, dass die Positionierhülse eine Innenkontur aufweist, die so mit dem Positionierstift des Verbinderbauteils zusammenwirkt, dass das Gassackmodul bei der Montage gegenüber dem Lenkrad toleranzgenau ausgerichtet wird.

Ein weiterer Aspekt der vorliegenden Erfindung betrifft ein Set mit einem zuvor beschriebenen Verbinderbauteil und einer zuvor beschriebenen Positionierhülse. Das erfindungsgemäße Set eignet sich zur Verbindung von unterschiedlichen Gassackmodulen mit unterschiedlichen Lenkrädern. Insofern ist das Set für unterschiedliche Lenkradbaugruppen universell einsetzbar.

Die Erfindung betrifft auch die Verwendung eines Verbinderbauteils oder eines Sets aus Verbinderbauteil und Positionierhülse zum Verbinden unterschiedlicher Lenkräder mit unterschiedlichen Gassackmodulen.

Das detailliert beschriebene Verbinderbauteil kann in ein Lenkrad integriert sein. Insofern befasst sich die Erfindung mit einem Lenkrad, das ein derartiges Verbinderbauteil aufweist. Das Lenkrad kann in bevorzugter Ausgestaltung ein Lenkradskelett und eine Lenkradumschäumung aufweisen, wobei das lenkradseitige Teil des Verbinderbauteils, insbesondere ein Verankerungselement des lenkradseitigen Teils, zumindest teilweise in die Lenkradumschäumung eingebettet ist. Wie zuvor bereits erläutert, reduziert die Einbettung des lenkradseitigen Teils in die Lenkradumschäumung die Toleranzkette, sodass ein Hupenspalt zwischen dem Gassackmodul und dem Lenkrad toleranzgenau eingestellt werden kann.

Gemäß einem weiteren erfindungsgemäßen Aspekt wird im Rahmen der vorliegenden Anmeldung ein Gassackmodul mit wenigstens einem Set offenbart und beansprucht. Das Gassackmodul weist dabei wenigstens zwei Positionierhülsen auf, die jeweils um 90° zueinander verdreht angeordnet sind. Durch die verdrehte Anordnung von wenigstens zwei Positionierhülsen in einem Winkel von 90° wird eine exakte Positionierung und Ausrichtung des Gassackmoduls in einem Lenkrad ermöglicht, da zwischen dem Gassackmodul und dem Lenkrad üblicherweise nur zwei Freiheitsgrade bestehen. Folglich reichen zwei Positionierhülsen aus, um das Gassackmodul exakt im Lenkrad auszurichten.

Die vorliegende Erfindung bezieht sich auch auf eine Lenkradbaugruppe mit einem zuvor genannten Lenkrad und einem zuvor beschriebenen Gassackmodul. Dabei kann in einer bevorzugten Ausführungsform vorgesehen sein, dass das Gassackmodul wenigstens zwei, insbesondere drei Positionierhülsen aufweist, die mit wenigstens zwei, insbesondere drei, am Lenkrad fixierten Verbinderbauteilen formschlüssig verbunden sind. Die am Lenkrad fixierten Verbinderbauteile können insbesondere mittels ihrer Verankerungselemente in eine Lenkradumschäumung des Lenkrads eingebettet sein. Die Positionierhülsen können mit dem Gassackmodul fest verbunden oder einstückig mit dem Gassackmodul ausgebildet sein. Vorzugsweise sind sowohl die Positionierhülsen als auch die Verbinderbauteile jeweils um 90° zueinander versetzt am Gassackmodul bzw. am Lenkrad angeordnet, sodass das Gassackmodul toleranzgenau mit dem Lenkrad verbunden ist.

Schließlich wird im Rahmen der Anmeldung ein Verfahren zur Herstellung einer Lenkradbaugruppe, insbesondere einer zuvor beschriebenen Lenkradbaugruppe, offenbart und beansprucht, wobei das Verfahren die folgenden Schritte umfasst:
- Bereitstellen eines Lenkradskeletts;
- Umschäumen des Lenkradskeletts zur Bildung eines Lenkrads mit einer Lenkradumschäumung;
- Fixieren von wenigstens zwei Verbinderbauteilen in der Lenkradumschäumung;
- Bereitstellen eines Gassackmoduls mit wenigstens zwei Positionierhülsen; und
- Rastverbinden der Positionierhülsen mit modulseitigen Teilen der Verbinderbauteile zur Fixierung des Gassackmoduls am Lenkrad.

Das erfindungsgemäße Verfahren zeichnet sich durch eine einfache Handhabbarkeit aus, sodass der Produktionsprozess für Lenkradbaugruppen vereinfacht und beschleunigt wird.

Die Erfindung wird im Folgenden anhand von Ausführungsbeispielen unter Bezugnahme auf die beigefügten, schematischen Zeichnungen näher erläutert. Darin zeigen:
- Figur 1 eine Seitenansicht eines nicht zur Erfindung gehörigen Verbinderbauteils;
- Figur 2 eine Schnittansicht des Verbinderbauteils gemäß Figur 1, wobei das Verbinderbauteil mit einer Positionierhülse gekoppelt ist;
- Figur 3 eine perspektivische Ansicht des Verbinderbauteils gemäß Figur 1;
- Figur 4 eine perspektivische Ansicht des Verbinderbauteils mit einer Positionierhülse gemäß Figur 2;
- Figur 5 eine Draufsicht auf das Verbinderbauteil gemäß Figur 1, wobei eine Positionierhülse mit dem Verbinderbauteil gekoppelt ist;
- Figur 6 eine Draufsicht auf eine Modulaufnahme eines Lenkrads mit darin angeordneten Verbinderbauteilen gemäß den Figuren 1 bis 5;
- Figur 7 eine Draufsicht auf ein Gassackmodul mit drei Positionierhülsen die teilweise verdreht zueinander angeordnet sind;
- Figur 8 eine perspektivische Ansicht eines Gassackmoduls mit den Positionierhülsen gemäß Figur 7.
- Figur 9 eine Schnittansicht eines erfindungsgemäßen Verbinderbauteils gemäß einem bevorzugten Ausführungsbeispiel; und
- Figur 10 eine auseinandergezogene perspektivische Ansicht des Verbinderbauteils gemäß Figur 9.

In den Figuren ist ein Verbinderbauteil 1 zur Befestigung eines Gassackmoduls 50 an einem Lenkrad 40 gezeigt. Das Verbinderbauteil 1 weist ein lenkradseitiges Teil 10 und ein modulseitiges Teil 20 auf. Das lenkradseitige Teil 10 und das modulseitige Teil 20 sind relativ zueinander beweglich. Insbesondere sind das lenkradseitige Teil 10 und das modulseitige Teil 20 gegeneinander vorgespannt. Zwischen dem modulseitigen Teil 20 und dem lenkradseitigen Teil 10 ist ein Vorspannmittel 14, vorzugsweise in Form einer Schraubenfeder, angeordnet. Das Vorspannmittel 14 bzw. die Schraubenfeder ist als Druckfeder ausgebildet, sodass das modulseitige Teil in einer Ruheposition von dem lenkradseitigen Teil beabstandet angeordnet ist.

Das modulseitige Teil 20 ist in eine Hupposition verschiebbar, in welcher das modulseitige Teil 20 das lenkradseitige Teil 10 berührt.

Das lenkradseitige Teil 10 und das modulseitige 20 sind allgemein miteinander verbunden, sodass das Verbinderbauteil insgesamt ein einheitliches, vorzugsweise kompaktes, Bauteil bildet. Mit anderen Worten ist das Verbinderbauteil einheitlich handhabbar bzw. bildet eine einzelne bzw. separate Komponente einer übergeordneten Baugruppe. Das Verbinderbauteil bildet insbesondere ein multifunktionales Bauteil mit einer Führungseinrichtung und elektrischen Kontakten für einen Hupenstromkreis. Die Führungseinrichtung ermöglicht eine geführte Bewegung des modulseitigen Teils 20 von der Ruheposition in die Hupposition. Die elektrischen Kontakte sind geeignet, um einen Hupenstromkreis zu schließen, wobei sich die elektrischen Kontakte in der Hupposition des modulseitigen Teils 20 berühren.

Vorteilhaft vereint das Verbinderbauteil 1 zwei Funktionen in einem einzigen multifunktionalen Bauteil. Einerseits übernimmt das Verbinderbauteil eine Führungsfunktion für die Hupenbetätigung, wobei das modulseitige Teil 20 in einer geführten Verschiebebewegung dem lenkradseitigen Teil 10 angenähert wird. Gleichzeitig ist die Hupenfunktion in das Verbinderbauteil integriert. So können mit einem einzigen Bauteil, nämlich dem Verbinderbauteil 1, zwei Funktionen gleichzeitig in eine Lenkradbaugruppe integriert werden.

Das lenkradseitige Teil 10 weist ein Verankerungselement 11 auf, wobei das Verankerungselement 11 mehrere widerhakenähnliche Rastzähne aufweist. Ferner ist am lenkradseitigen Teil 10 ein Haltevorsatz 17 vorgesehen, der von dem Verankerungselement 11 beabstandet angeordnet ist und einen Vorsprung 18 umfasst. Das Verankerungselement 11 und der Haltevorsatz 17 dienen zur Fixierung des lenkradseitigen Teils 10 in einer Lenkradumschäumung 41 eines Lenkrads 40. Mit Hilfe der widerhakenähnlichen Rastzähne am Verankerungselement 11 und dem Vorsprung 18 am Haltevorsatz 17 wird das lenkradseitige Teil 10 gut in der Lenkradumschäumung 41 fixiert. Das Verankerungselement 11 und der Haltevorsatz 17 sind durch einen Steg 19 miteinander verbunden. Der Steg 19 umfasst Schnapphaken 15, die zur Verbindung des lenkradseitigen Teils 10 mit dem modulseitigen Teil 20 in Schnappausnehmungen 24 des modulseitigen Teil 20 eingreifen.

Ferner ist zwischen dem Verankerungselement 11 und dem Steg 19 eine Spannmittelaufnahme 13 vorgesehen, in welcher das Vorspannmittel 14 gelagert ist. Die Spannmittelaufnahme ist im Wesentlichen topfförmig ausgebildet. Die Spannmittelaufnahme 13 und das Verankerungselement 11 sind insbesondere koaxial zueinander ausgerichtet.

In axialer Fortsetzung zum Verankerungselement 11 ist in der Spannmittelaufnahme 13 ferner ein Positionierstift 12 angeordnet. Der Positionierstift 12 fluchtet mit dem Verankerungselement 11 und erstreckt sich durch das Vorspannmittel 14. Ferner durchgreift der Positionierstift 12 das modulseitige Teil 20, wobei das modulseitige Teil 20 eine entsprechende Durchgriffsöffnung 22 aufweist. Der Positionierstift 12 erstreckt sich durch die Durchgriffsöffnung 22 des modulseitigen Teils 20.

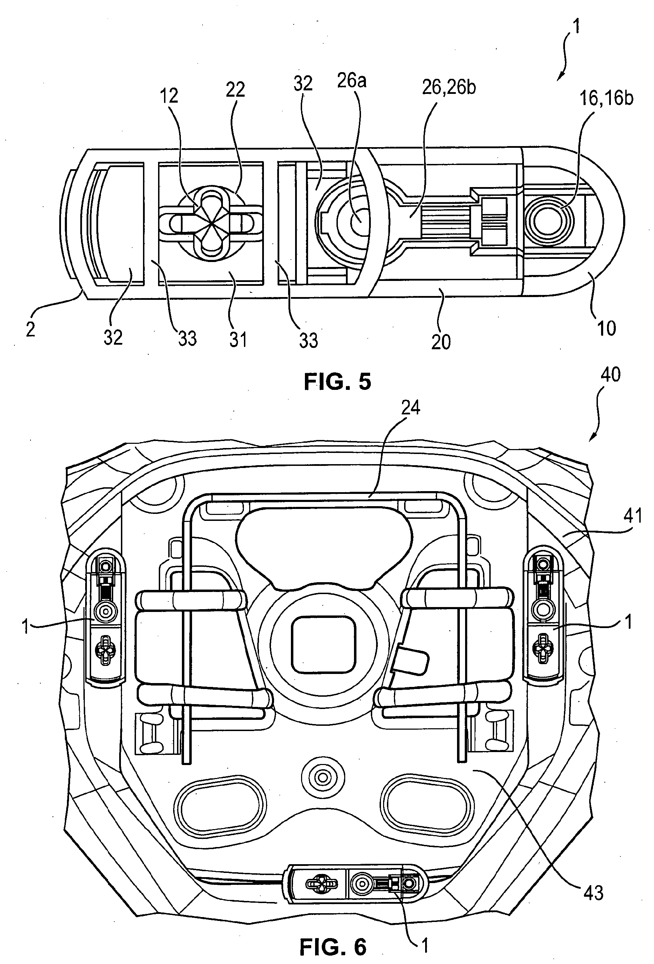

Der Positionierstift 12 ist einstückig mit dem lenkradseitigen Teil 10 ausgebildet und weist ein Kreuzprofil auf, das in Fig. 5 gut erkennbar ist. Das Kreuzprofil umfasst eine Profilbreite und eine Profilhöhe, Wobei die Profilbreite sich parallel zum Steg 19 des lenkradseitigen Teils 10 erstreckt. Die Profilhöhe erstreckt sich rechtwinklig zur Profilbreite. Die Profilbreite ist größer als die Profilhöhe des Kreuzprofils. Insbesondere ist die Profilbreite derart angepasst, dass der Positionierstift 12 spielfrei zwischen zwei Trennwänden 33 einer Positionierhülse 2 eingreifen kann. Zur einfachen Handhabung bei der Einführung des Positionierstift 12 in eine Positionierhülse 2 ist der Positionierstift 12 an seinem freien Ende spitz zulaufend ausgebildet. Mit anderen Worten reduziert sich die Profilbreite und/oder die Profilhöhe des Kreuzprofils in Richtung zu einem freien Ende des Positionierstifts 12. Dies erleichtert das Zusammenfügen des Verbinderbauteils 1 mit der Positionierhülse 2, wobei der Positionierstift 12 eine Führungsfunktion wahrnimmt.

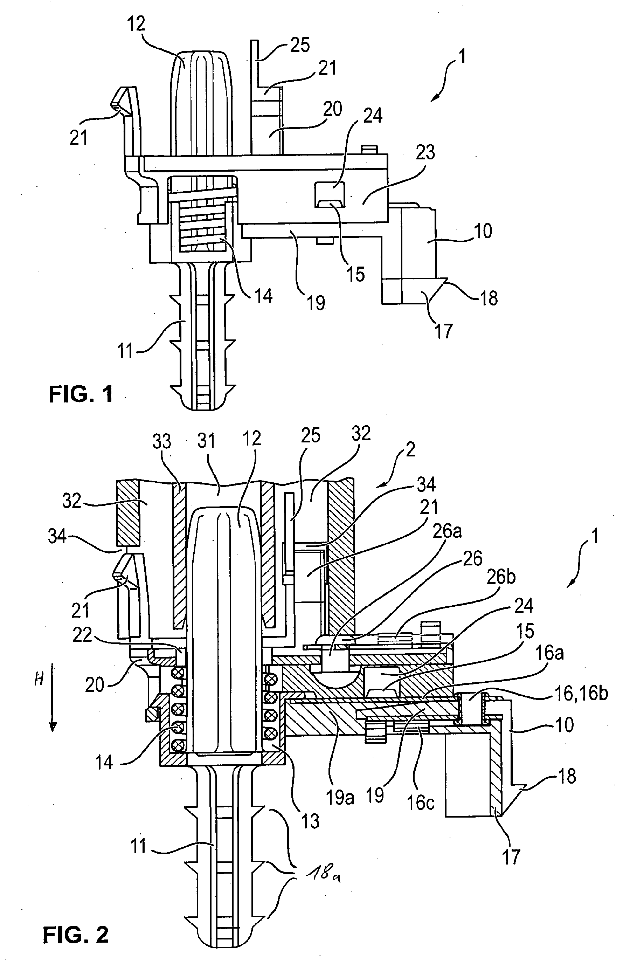

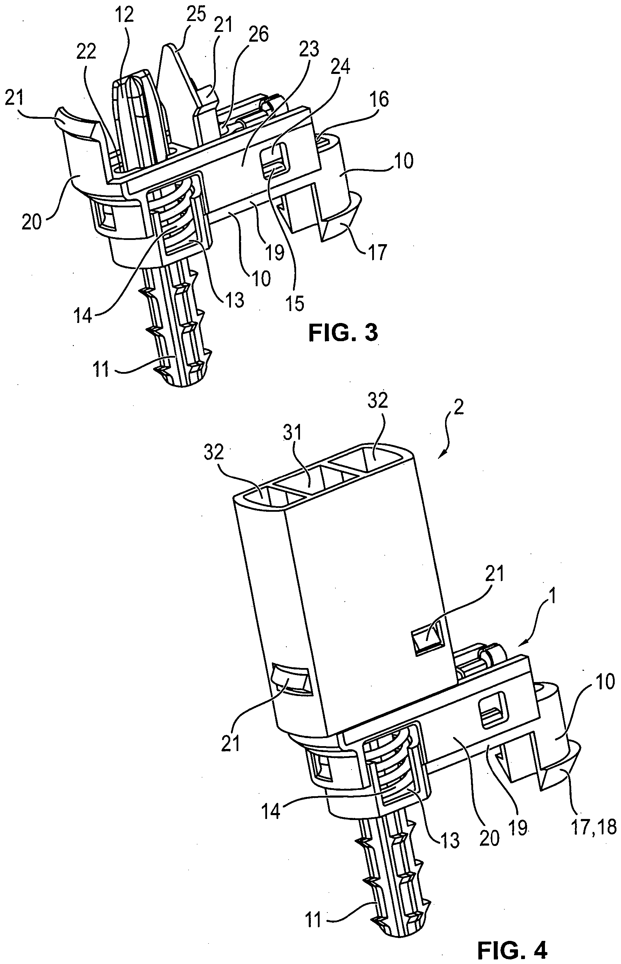

Das modulseitige Teil 20 weist Rasthaken 21 auf, die sich im Wesentlichen parallel zum Positionierstift 12 erstrecken. Die Rasthaken 21 umfassen Rastnasen, die nach außen weisen. Die Rasthaken 21 wirken zur Verbindung mit einer Positionierhülse 2 mit Rästöffnungen 34 der Positionierhülse 2 zusammen. Auf diese Weise ergibt sich eine formschlüssige Verbindung zwischen der Positionierhülse 2 und dem Verbinderbauteil 1, wie in den Fig. 2 und 4 dargestellt ist.

An wenigstens einem Rasthaken 21 ist ferner eine Zentrierplatte 25 angeformt, die sich parallel zur Profilhöhe des Positionierstifts 12 erstreckt. Die Zentrierplatte 25 weist eine im Wesentlichen dreieckförmige Kontur auf, wobei eine Dreiecksspitze von dem Steg 19 des lenkradseitigen Teils 10 weg weist. Die Zentrierplatte 25 kann beim Zusammenfügen mit einer Positionierhülse 2 in die Positionierhülse 2, insbesondere eine Außenkammer 32 der Positionierhülse 2 eingreifen und die Führung der Fügebewegung zwischen der Positionierhülse 2 und den Verbinderbauteilen 1 unterstützen.

Das modulseitige Teil 20 umfasst ferner Seitenwände 23, die sich parallel zueinander erstrecken und Schnappausnehmungen 24 aufweisen. Die Schnappausnehmungen 24 nehmen die Schnapphaken 15 des lenkradseitigen Teils 10 auf. Die Höhe der Schnappausnehmungen 24 ist derart bemessen, dass eine Relativbewegung des modulseitigen Teils 20 gegenüber dem lenkradseitigen Teil 10 ermöglicht ist, wobei die Schnapphaken 15 sowohl in der Ruheposition des modulseitigen Teils 20 als auch in der Hupposition des modulseitigen Teils 20 mit den Schnappausnehmungen 24 in Eingriff stehen. Der Steg 19 des lenkradseitigen Teils 10 ist zwischen den Seitenwänden 23 des modulseitigen Teils 20 geführt. Mit anderen Worten überlappen die Seitenwände 23 des modulseitigen Teils 20 das lenkradseitige Teil 10, insbesondere den Steg 19, sowohl in der Ruheposition, als auch in der Hupposition. Auf diese Weise werden die elektrischen Kontakte für die Hupenfunktion, die zwischen den Seitenwänden 23 angeordnet sind, vor Verschmutzung geschützt.

Die Anordnung der elektrischen Kontakte für die Hupenfunktion ist in Fig. 2 gut erkennbar. Die elektrischen Kontakte umfassen ein ersten Hupenkontakt 16, der am lenkradseitigen Teil 10 angeordnet ist. Der erste Hupenkontakt 16 ist im Wesentlichen als auslenkbare Platte ausgebildet, die auf dem Steg 19 aufliegend zwischen dem modulseitigen Teil 20 und dem lenkradseitigen Teil 10 angeordnet ist. Die flexible Platte 16a ist durch einen Durchgriffskontakt 16b mit einem ersten Kabelschuh 16c verbunden, der auf einer Unterseite des Stegs 19 angeordnet ist. Der Steg 19 weist überdies eine Auslenköffnung 19a auf, sodass die Kontaktplatte 16a unter Druck auslenkbar ist.

Am modulseitigen Teil 20 ist ein zweiter Hupenkontakt 26 angeordnet, wobei der zweite Hupenkontakt 26 einen Kontaktniet 26a aufweist, der das modulseitige Teil 20 durchgreift und zwischen dem modulseitigeh Teil 20 und dem lenkradseitigen Teil 10 einen kuppelförmigen bzw. linsenartigen Kopf aufweist. Der Köntaktniet 26a ist mit einem zweiten Kabelschuh 26b verbunden, der auf einer Oberseite des modulseitigen Teils 20 angeordnet ist. In Fig. 2 ist gut erkennbar, dass der Kontaktniet 26a in der Hupposition die Kontaktplatte 16a des ersten Hupenkontakts 16 berührt und gegebenenfalls auslenkt. Bei Kontakt der beiden Hupenkontakte 16, 26 wird ein Hupenstromkreis geschlossen, sodass das Signalhorn eines Fahrzeugs ertönt.

Das in den Fig. 1 und 3 dargestellte Verbinderbauteil 1 wirkt vorzugsweise mit einer Positionierhülse 2 zusammen, die in den Figuren 2, 4 und 5 dargestellt ist. Die Positionierhülse 2 umfasst eine Innenkammer 31 und zwei durch Trennwände 33 von der Innenkammer 31 getrennte Außenkammern 32. Ferner umfasst die Positionierhülse 2 Rastöffnungen 34, die derart angeordnet sind, dass sie mit dem Rasthaken 21 des Verbinderbauteils 1 zusammenwirken, sodass die Positionierhülse 2 formschlüssig mit dem Verbinderbauteil 1 koppelbar ist. Wie in den Figuren 2 und 5 gut erkennbar ist, greift der Positionierstift 12 in die Innenkammer 31 der Positionierhülse 2 ein, wobei der Positionierstift 12 zumindest hinsichtlich der Profilbreite des Kreuzprofils spielfrei an den Trennwänden 33 der Positionierhülse 2 anliegt. Ferner ist in Fig. 5 erkennbar, dass die Zentrierplatte 25 ebenfalls spielfrei in einer Innenkammer 31 der Positionierhülse 2 angeordnet ist. Wegen des spitz zulaufenden Positionierstifts 12 und der spitz zulaufenden Zentrierplatte 25 wird ein einfaches Zusammenfügen von der Positionierhülse 2 und des Verbinderbauteils 1 erreicht. Insofern bilden die der Positionierstift 12 und die Zentrierplatte 25 Bestandteile einer Führungseinrichtung zum geführten Fügen der Positionierhülse 2 mit der Verbinderbauteil 1.

Eine weitere Führungseinrichtung, die zur geführten Bewegung des modulseitigen Teils 20 von der Ruheposition in die Hupposition dient, wird insbesondere durch die den Steg 19 umgreifenden Seitenwände 23 und die Durchgriffsöffnung 22 gebildet, die an die Profilkontur des Positionierstifts 12 angepasst ist. Mit anderen Worten sind das modulseitige Teil 20 und das lenkradseitige Teil 10 derart formgerecht und dimensionsgerecht aufeinander abgestimmt, dass eine geführte, insbesondere lineare Bewegung, von der Hupposition, in der das modulseitige Teil 20 und das lenkradseitige Teil 10 voneinander beabstandet angeordnet sind, sodass der Hupstromkreis geöffnet ist, in die Hupposition, in der sich das modulseitige Teil 20 und das lenkradseitige Teil 10, insbesondere die Hupenkontakte 16, 26 berühren, um den Hupenstromkreis zu schließen, bereitgestellt wird. Dabei sind die Toleranzen zwischen dem modulseitigen Teil 20 und dem lenkradseitigen Teil 10 vorzugsweise so angepasst, dass eine Querverschiebung des modulseitigen Teils 20 bzgl. des lenkradseitigen Teils 10 weitgehend ausgeschlossen ist. Damit ist sichergestellt, dass der Hupenspalt zwischen Gassackmodul 50 und Lenkrad 40 im Wesentlichen konstant bleibt, zumindest in der Ruheposition.

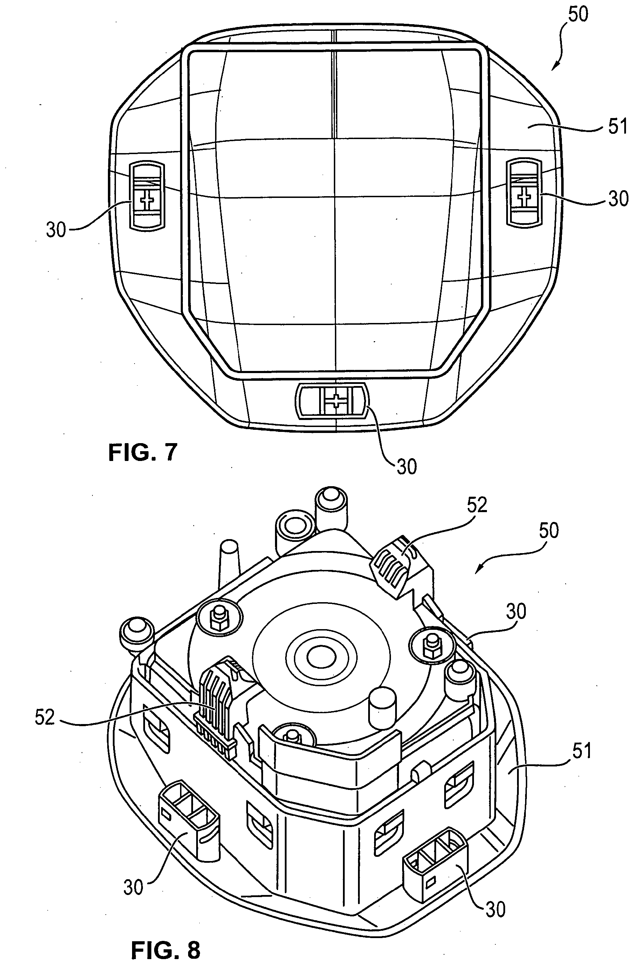

Fig. 6 zeigt einen Ausschnitt eines Lenkrads 40, insbesondere einer Modulaufhahme in einem Zentralbereich des Lenkrads 40. Das Lenkrad 40 ist bei den dargestellten Ausführungsbeispielen mit drei Verbinderbauteilen 1 ausgestattet, wobei zwei Verbinderbauteile 1 parallel zueinander ausgerichtet sind. Ein drittes Verbinderbauteil 1 ist um 90° verdreht zu den beiden weiteren Verbinderbauteilen 1 angeordnet. Auf diese Weise wird eine eindeutige Ausrichtung eines Gassackmoduls 50 im Lenkrad 40 erreicht, da die Profilbreite des jeweiligen Positionierstifts 12 für eine passgenaue Fügung des Gassackmoduls 50 sorgen. Die Verbinderbauteile 1 sind jeweils in eine Lenkradumschäumung 41 eingebettet bzw. in einer Lenkradumschäumung 41 verankert. Die Lenkradumschäumung 41 weist im Bereich der Modulaufnahme für das Gassackmodul 50 eine Aussparung auf, sodass zwischen den Verbinderbauteilen 1 das Lenkradskelett 43 erkennbar ist. Mit dem Lenkradskelett 43 ist ein Haltebügel 42 verbunden, der mit entsprechenden Befestigungshaken 52 des Gassackmoduls 50 verrastet und so das Gassackmodul 50 fest mit dem Lenkradskelett 43 verbindet. Fig. 7 zeigt ein Gassackmodul 50 mit einer Abdeckung 51, wobei die Abdeckung 51 mit Positionierhülsen 30 verbunden ist. Gemäß der hier beschriebenen Ausführungsform sind die in den Firguren 2 bis 6 dargestellten Positionierhülsen 2 identisch mit den in den Figuren 7 und 8 gezeigten Positionierhülsen 30 Die räumliche Anordnung der Positionierhülsen 30 ist ebenfalls gut in Fig. 8 erkennbar. Die Positionierhülsen 30 können mit dem Gassackmodul 50, insbesondere mit der Abdeckung 51, fest verbunden sein. Es ist auch möglich, die Positionierhülsen 30 mit der Abdeckung 51 bzw. allgemein dem Gassackmodul 50 einteilig auszubilden. Das Gassackmodul 50 umfasst die Befestigungshaken 52, die zur Fixierung des Gassackmoduls 50 am Lenkradskelett 43 mit dem Haltebügel 42 zusammenwirken.

Zur Herstellung einer Lenkradbaugruppe, die das Lenkrad 40 und das Gassackmodul 50 umfasst, ist vorgesehen, zunächst das Lenkrad 40 durch Umschäumen eines Lenkradskeletts 43 mit einer Lenkradumschäumung 41 herzustellen. In die Lenkradumschäumung 41 werden anschließend die Verbinderbauteile 1 eingedrückt, wobei das lenkradseitige Teil 10, insbesondere das Verankerungselement 11 und der Haltevorsatz 17, mit der Lenkradumschäumung 41 verrasten. Dabei werden die Verbinderbauteile 1 bzgl. des Lenkrads 40 exakt ausgerichtet. Da die
Verbinderbauteile 1 unmittelbar in der Lenkradumschäumung 41 angeordnet werden, ist ein weiterer, zusätzlicher Ausrichtvorgang nicht mehr erforderlich.

Abschließend wird das Gassackmodul 50, das mit den Positionierhülsen 30 ausgestattet ist, auf das Lenkrad 40 aufgesetzt, wobei die Fügebewegung zwischen der Positionierhülse 30 und dem Verbinderbauteil 1 durch den Positionierstift 12 und die Zentrierplatte 25 geführt wird. Durch entsprechenden Druck auf das Gassackmodul 50 verrasten die Positionierhülsen 30 mit dem Verbinderbauteil 1. Insbesondere rasten die Rasthaken 21 des modulseitigen Teils 20 in die Rastöffnungen 34 der Positionierhülsen 30 ein. Gleichzeitig greift der Haltebügel 42 in die Befestigungshaken 52 des Gassackmoduls 50 ein, sodass das Gassackmodul 50 fest mit dem Lenkrad 40 verbunden ist.

Da beim Verrasten der Positionierhülse 30 das modulseitige Teil 20 gleichzeitig gegen die Federkraft des Vorspannmoduls 14 in Richtung des lenkradseitigen Teils 10 gedrückt wird, also die Hupposition einnimmt, kann bereits beim Zusammenfügen vom Gassackmodul 50 und Lenkrad 40 eine Funktionsprüfung der Hupenkontakte 16, 26 erfolgen. Insgesamt werden somit die einzelnen Schritte für die Herstellung von Lenkradbaugruppen reduziert, was sich positiv auf die Serienproduktion von Lenkradbaugruppen auswirkt.

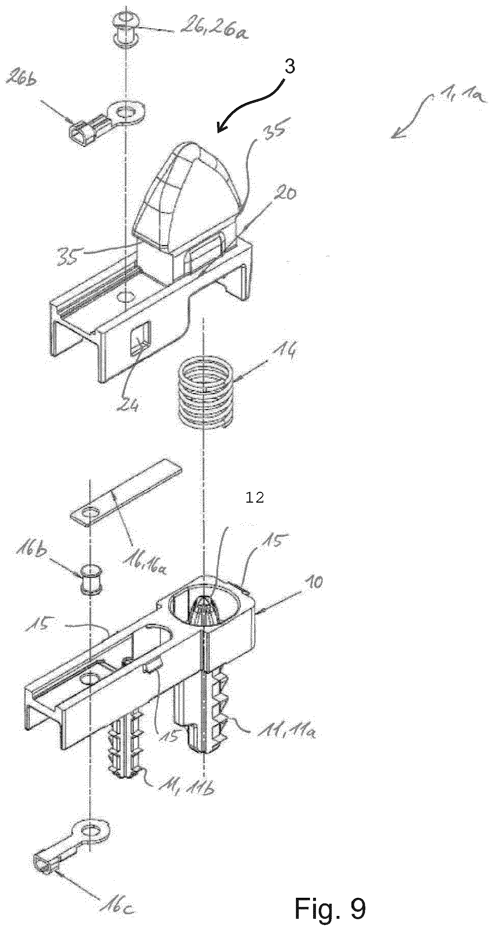

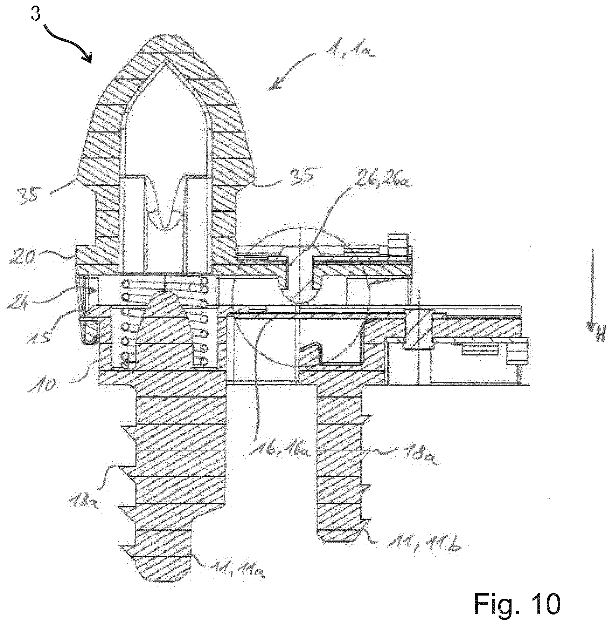

Die im Folgenden anhand der Figuren 9 und 10 beschriebene Ausführungsform der Erfindung unterscheidet sich von dem zuvor beschriebenen nicht erfindungsgemäßen Beispiel im Wesentlichen dadurch, dass anstelle der am modulseitigen Teil 20 ausgebildeten Rasthaken 21 eine einstückig mit dem modulseitigen Teil 20 des Verbinderbauteils 1 ausgebildete Profilnase 3 vorgesehen ist.

Zur einfachen Handhabung bei der Einführung der Profilnase 3 in eine Positionierhülse 30 des Gassackmoduls 50 (Fig. 8) ist die Profilnase 3 an ihrem freien Ende spitz zulaufend ausgebildet. Mit anderen Worten reduziert sich die Profilbreite und/oder die Profilhöhe der Profilnase 3 in Richtung zu einem freien Ende der Profilnase 3. Dies erleichtert das Zusammenfügen des Verbinderbauteils 1, 1a mit der Positionierhülse 30, wobei die Profilnase 3 eine Führungsfunktion wahrnimmt.

Auch ist im Gegensatz zum ersten Beispiel der Positionierstift 12 lediglich so hoch ausgebildet, dass er eine gute Führung der Rückstellfeder 14 gewährleisten kann. Die Führung des Gassackmoduls 50 erfolgt hier über die Profilnase 3.

Bei der Montage gemäß der Ausführungsform wird das Gassackmodul 50, das mit den Positionierhülsen 30 ausgestattet ist, auf das Lenkrad 40 aufgesetzt, wobei die Fügebewegung zwischen der Positionierhülse 30 und dem Verbinderbauteil 1 durch die Profilnase 3 geführt wird. Durch entsprechenden Druck auf das Gassackmodul 50 verrasten Vorsprünge 35 an entsprechenden Rastaufnahmen in den Positionierhülsen 30 am Gassackmodul 50, sodass das Gassackmodul 50 fest mit dem Lenkrad 40 verbunden ist.

Da beim Verrasten der Positionierhülse 30 an der Profilnase 3 das modulseitige Teil 20 gleichzeitig gegen die Federkraft des Vorspannmittels 14 in Richtung des lenkradseitigen Teils 10 gedrückt wird, also die Hupposition einnimmt, kann bereits beim Zusammenfügen vom Gassackmodul 50 und Lenkrad 40 eine Funktionsprüfung der Hupenkontakte 16, 26 erfolgen. Insgesamt werden somit die einzelnen Schritte für die Herstellung von Lenkradbaugruppen reduziert, was sich positiv auf die Serienproduktion von Lenkradbaugruppen auswirkt.

Die Gestalt der Profilnase 3 entspricht in ihrem Längsschnitt dem Schnitt einer Knickpyramide, also einem vierseitigen Prisma, bei dem an zwei einander gegenüber liegenden Seiten die jeweilige Steigung im Bereich der Basis größer ist als im Bereich der Spitze. Die Spitze ist hierbei als abgerundetes oberes Ende der Profilnase 3 zu verstehen an der die Seiten zusammenkommen. Auch sind die Ränder bzw. Kanten zwischen den Seiten abgerundet.

Bei der gezeigten Ausführungsform der Profilnase 3 entspricht ihr Querschnitt dem Schnitt einer "normalen" Pyramide; jedoch ist auch eine Ausführungsform denkbar, bei der alle vier Seiten einen (abgerunderten) Knick und zweierlei Steigungen aufweisen, wie zuvor beschrieben.

Hierdurch, insbesondere durch die Ausgestaltung als (Teil-)Knickpyramide ist ein einfaches Zusammenbauen des Verbinderbauteils 1 mit dem Gassackmodul 50 geschaffen worden.

Bei dem nicht erfindungsgemäßen Beispiel und bei der Ausführungsform der Erfindung ist vorgesehen, dass das Verbinderbauteil 1an seinem lenkradseitigen Teil 10 zumindest ein Verankerungselement 11, 11a, 11b zur Fixierung in einer Lenkradumschäumung 41 aufweist. Insbesondere sind hieran Widerhaken 18a zu dieser Fixierung vorgesehen.

Gemäß einer in den Fig. 9 und 10 gezeigten Variante weist das Verankerungselement 11 zwei Verankerurigsteilelemente 11a, 11b auf, die jeweils Widerhaken 18a aufweisen. Vorzugsweise sind die Widerhaken jedoch jeweils nur an Außenseiten eines Verankerungsteilelementes 11a, 11b ausgebildet, die nicht zu Außenseiten des jeweils anderen Verankerungsteilelementes 11b, 11a hin orientiert sind.

Weiterhin ist bevorzugt vorgesehen, dass die elektrischen Kontakte einen ersten Hupenkontakt 16 und einen zweiten Hupenkontakt 26 aufweisen, wobei der erste Hupenkontakt 16 am lenkradseitigen Teil 10 und der zweite Hupenkontakt 26 am modulseitigen Teil 20 angeordnet sind, und wobei zumindest einer der beiden Hupenkontakte 16, 26 in einer Hupenrichtung H um einen Weg verlagerbar ist, der groß genug ist, um ein Verrasten des modulseitiges Teils 20 mit dem lenkradseitigen Teil 10 zu gestatten.

Hierbei ist der mögliche Weg der Verlagerung insbesondere zumindest 1 mm, vorzugsweise 2 mm, insbesondere 3 mm, größer ist als der Weg, der erforderlich ist, um einen elektrischen Kontakt zwischen den beiden Hupenkontakten 16, 26 zu schließen.

Ebenso ist bevorzugt, dass zumindest einer der beiden Hupenkontakte 16, 26 eine Hupenkontaktplatte 16a aufweist, die in der Hupenrichtung H um den Weg verlagerbar oder auslenkbar ist, um so ein sicheres Verrasten der jeweiligen Bauteile untereinander zu gewährleisten.

Es ist somit vorgesehen, dass, zur Schaffung einer in Huprichtung H beweglichen Rastverbindung zwischen dem modulseitigen Teil 20 und dem lenkradseitigen Teil 10 an einem der Teile 10, 20 Schnapphaken 15 und an dem anderen Teil 20 dazu korrespondierende Schnappausnehmungen 24 ausgebildet sind.

### Bezugszeichenliste

- 1: Verbinderbauteil
- 2: Positiönierhülse
- 3: Profilnase
- 10: lenkradseitiges Teil
- 11: Verankerungselement
- 12: Positionierstift
- 13: Spannmittelaufnahme
- 14: Vorspannmittel
- 15: Schnapphaken
- 16: erster Hupenkontakt
- 16a: Kontaktplatte
- 16b: Durchgriffskontakt
- 16c: erster Kabelschuh
- 17: Haltefortsatz
- 18: Vorsprung
- 19: Steg
- 20: modulseitiges Teil
- 21: Rasthaken
- 22: Durchgriffsöffnung
- 23: Seitenwand
- 24: Schnappausnehmung
- 25: Zentrierplatte
- 26: zweiter Hupenkontakt
- 26a: Kontaktniet
- 26b: zweiter Kabelschuh
- 30: Positionierhülse
- 31: Innenkammer
- 32: Außenkammer
- 33: Trennwand
- 34: Rastöffnung
- 40: Lenkrad
- 41: Lenkradumschäumung
- 42: Haltebügel
- 43: Lenkradskelett
- 50: Gassackmodul
- 51: Abdeckung
- 52: Befestigungshaken

## Patentansprüche

1. Verbinderbauteil (1) zur Befestigung eines Gassackmoduls (50) an einem Lenkrad (40) mit
einem lenkradseitigen Teil (10) und
einem modulseitigen Teil (20),
die relativ zueinander beweglich und gegeneinander vorgespannt sind derart, dass das modulseitige Teil (20) in einer Ruheposition von dem lenkradseitigen Teil (10) in einer Huprichtung (H) beabstandet und in eine Hupposition verschiebbar ist, in welcher das modulseitige Teil (20) das lenkradseitige Teil (10) berührt,
wobei das modulseitige Teil (20) und das lenkradseitige Teil (10) miteinander verbunden sind und ein multifunktionales Bauteil bilden, das eine Führungseinrichtung zur geführten Bewegung des modulseitigen Teils (20) von der Ruheposition in die Hupposition und elektrische Kontakte für einen Hupenstromkreis aufweist,
wobei sich die elektrischen Kontakte in der Hupposition berühren,
**dadurch gekennzeichnet, dass** an dem modulseitigen Teil (20) eine Profilnase (3) zur Positionierung des Verbinderbauteils (1) an einem Gassackmodul (50) vorgesehen ist, wobei die Gestalt der Profilnase (3) im Wesentlichen einem vierseitigen Prisma entspricht, bei dem an zumindest zwei der einander gegenüberliegenden Seiten die jeweilige Steigung im Bereich der Basis größer ist als im Bereich der Spitze,
wobei ein freies, von dem modulseitigen Teil (20) abgewandtes Ende der Profilnase (3), an dem die Seiten des vierseitigen Prismas zusammenkommen, abgerundet ist und ferner auch die Kanten zwischen den Seiten des vierseitigen Prismas abgerundet sind.

2. Verbinderbauteil (1) nach Anspruch 1, **dadurch gekennzeichnet, dass** das lenkradseitige Teil (10) zumindest ein Verankerungselement (11, 11a, 11b) zur Fixierung in einer Lenkradumschäumung (41) aufweist, das insbesondere mit Widerhaken (18a) zu dieser Fixierung aufweist, wobei das Verankerungselement (11) vorzugsweise zwei Verankerungsteilelemente (11a, 11b) aufweist, die jeweils Widerhaken (18a) aufweisen, jedoch nur an Außenseiten, die nicht zu einander hin orientiert sind.

3. Verbinderbauteil (1) nach Anspruch 1 oder 2, **dadurch gekennzeichnet, dass** die elektrischen Kontakte einen ersten Hupenkontakt (16) und einen zweiten Hupenkontakt (26) aufweisen, wobei der erste Hupenkontakt (16) am lenkradseitigen Teil (10) und der zweite Hupenkontakt (26) am modulseitigen Teil (20) angeordnet sind, und wobei zumindest einer der beiden Hupenkontakte (16, 26) in einer Hupenrichtung (H) um einen Weg verlagerbar ist, der groß genug ist, um ein Verrasten des modulseitiges Teils (20) mit dem lenkradseitigen Teil (10) zu gestatten, und insbesondere zumindest 1 mm, vorzugsweise 2 mm, insbesondere 3 mm, größer ist als der Weg, der erforderlich ist, um einen elektrischen Kontakt zwischen den beiden Hupenkontakten (16, 26) zu schließen, wobei vorzugsweise zumindest einer der beiden Hupenkontakte (16, 26) eine Hupenkontaktplatte (16a) aufweist, die in der Hupenrichtung (H) um den Weg verlagerbar oder auslenkbar ist.

4. Verbinderbauteil (1) nach Anspruch 1, 2 oder 3, **dadurch gekennzeichnet, dass**, zur Schaffung einer in Huprichtung (H) beweglichen Rastverbindung zwischen dem modulseitigen Teil (20) und dem lenkradseitigen Teil (10) an einem der Teile (10, 20) Schnapphaken (15) und an dem anderen Teil (20) dazu korrespondierende Schnappausnehmungen (24) ausgebildet sind.

5. Verbinderbauteil (1) nach einem der vorhergehenden Ansprüche, **dadurch gekennzeichnet, dass** die Führungseinrichtung einen Positionierstift (12) aufweist, der mit dem lenkradseitigen Teil (10) einteilig ausgebildet ist und sich durch das modulseitige Teil (20) erstreckt, wobei vorzugsweise der Positionierstift (12) ein Kreuzprofil aufweist, wobei eine Profilbreite des Kreuzprofils größer als eine Profilhöhe des Kreuzprofils ist, wobei, vorzugsweise, sich der Positionierstift (12) durch ein Vorspannmittel (14) erstreckt, das in einer Spannmittelaufnahme (13) des lenkradseitigen Teils (10) angeordnet ist.

6. Verbinderbauteil (1) nach einem der vorhergehenden Ansprüche, **dadurch gekennzeichnet, dass** die elektrischen Kontakte zwischen Seitenwänden (23) des modulseitigen Teils (20) angeordnet sind, wobei, vorzugsweise, die Führungseinrichtung die Seitenwände (23) des modulseitigen Teils (20) umfasst, wobei die Seitenwände (23) das lenkradseitige Teil (10) in der Ruheposition zumindest teilweise überlappen oder umgreifen derart, dass das lenkradseitige Teil (10) zwischen den Seitenwänden (23) geführt ist.

7. Verbinderbauteil (1) nach einem der voranstehenden Ansprüche, **dadurch gekennzeichnet, dass** die Gestalt der Profilnase (3) im Wesentlichen einem vierseitigen Prisma entspricht, bei dem an genau zwei der einander gegenüberliegenden Seiten die jeweilige Steigung im Bereich der Basis größer ist als im Bereich der Spitze, wobei die beiden anderen einander gegenüberliegenden Seiten der Profilnase (3) eine konstante Steigung aufweisen.

8. Verbinderbauteil (1) nach einem der vorhergehenden Ansprüche, **dadurch gekennzeichnet, dass** das modulseitige Teil (20) und das lenkradseitige Teil (10) schnappverbunden sind, wobei das lenkradseitige Teil (10) Schnapphaken (15) aufweist, die in Schnappausnehmungen (24) des modulseitigen Teils (20), insbesondere der Seitenwände (23) des modulseitigen Teils (20), eingreifen.

9. Set mit einem Verbinderbauteil (1) nach einem der Ansprüche 1 bis 8 und einer Positionierhülse (30, 2), die mit einem Gassackmodul (50) fest verbindbar oder in ein Gassackmodul (50) einstückig integrierbar ist und eine Innenkontur aufweist, die zum spielfreien Eingriff der Profilnase (3) des Verbinderbauteils (1) gemäß einem der Ansprüche 1 bis 8 geformt und/oder dimensioniert ist.

10. Verwendung eines Verbinderbauteils (1) nach einem der Ansprüche 1 bis 8 oder eines Sets nach Anspruch 9 zum Verbinden unterschiedlicher Lenkräder (40) mit unterschiedlichen Gassackmodulen (50).

11. Lenkrad (40) mit wenigstens einem Verbinderbauteil (1) nach einem der Ansprüche 1 bis 8, **gekennzeichnet durch** ein Lenkradskelett (43) und eine Lenkradumschäumung (41), wobei das lenkradseitige Teil (10), insbesondere ein Verankerungselement (11) des lenkradseitigen Teils (10), zumindest teilweise in die Lenkradumschäumung (41) eingebettet ist.

12. Gassackmodul (50) mit wenigstens einem Set nach dem Anspruch 9, **dadurch gekennzeichnet, dass** am Gassackmodul (50) wenigstens zwei Positionierhülsen (30, 2) vorgesehen sind, die vorzugsweise jeweils um 90° zueinander verdreht angeordnet sind.

13. Lenkradbaugruppe mit einem Lenkrad (40) nach Anspruch 11 und einem Gassackmodul (50) nach Anspruch 12, **dadurch gekennzeichnet, dass** das Gassackmodul (50) wenigstens zwei, insbesondere drei, Positionierhülsen (2) aufweist, die mit wenigstens zwei, insbesondere drei, am Lenkrad (40) fixierten Verbinderbauteilen (1) formschlüssig verbunden sind.

14. Verfahren zur Herstellung einer Lenkradbaugruppe nach Anspruch 13, mit den folgenden Schritten:
- Bereitstellen eines Lenkradskeletts (43);
- Umschäumen des Lenkradskeletts (43) zur Bildung eines Lenkrads (40) mit einer Lenkradumschäumung (41);
- Fixieren von wenigstens zwei Verbinderbauteilen (1) nach einem der Ansprüche 1 bis 8 in der Lenkradumschäumung (41);
- Bereitstellen eines Gassackmoduls (50) mit wenigstens zwei Positionierhülsen (2); und
- Rastverbinden der Positionierhülsen (2) mit modulseitigen Teilen (20) der Verbinderbauteile (1) zur Fixierung des Gassackmoduls (50) am Lenkrad (40).

## Claims

1. A connector component (1) for fastening an airbag module (50) to a vehicle steering wheel (40) comprising
a steering wheel-side part (10) and
a module-side part (20)
which are movable relative to each other and are biased against each other such that the module-side part (20) in an idle position is spaced apart from the steering wheel-side part (10) in a hooting direction (H) and is movable into a hooting position in which the module-side part (20) contacts the steering wheel-side part (10),
wherein the module-side part (20) and the steering wheel-side part (10) are interconnected and form a multifunctional component including a guiding device for guided movement of the module-side part (20) from the idle position into the hooting position and electric contacts for an electric horn circuit,
wherein the electric contacts contact each other in the hooting position,
**characterized in that** the module-side part (20) includes a profile lug (3) for positioning the connector component (1) at an airbag module (50), wherein the shape of the profile lug (3) essentially corresponds to a four-sided prism, wherein a gradient of at least two opposite sides of the prism is bigger in the region of a basis than in the region of a tip of the prism,
wherein a free end of the profile lug (3) remote from the module-side part (20), where the sides of the four-sided prism come together is rounded and further also the edges between the sides of the four-sided prism are rounded.

2. The connector component (1) according to claim 1, **characterized in that** the steering wheel-side part (10) includes at least one anchoring element (11, 11a, 11b) for fixation in a steering wheel foam coating (41), the at least one anchoring element (11) particularly including barbed hooks (18a) for said fixation, wherein the anchoring element (11) preferably includes two anchoring subelements (11a, 11b), each anchoring subelement (11a, 11b) including barbed hooks (18a) being provided however merely at outer faces that are not orientated towards each other.

3. The connector component (1) according to claim 1 or 2, **characterized in that** the electric contacts include a first horn contact (16) and a second horn contact (26), the first horn contact (16) being arranged at the steering wheel-side part (10) and the second horn contact (26) being arranged at the module-side part (20), and at least one of the two horn contacts (16, 26) being displaceable in a hooting direction (H) by a distance at least long enough to allow a snap-fit between the module-side part (20) and the steering wheel-side part (10), the distance being especially at least 1 mm, preferably 2 mm, especially 3 mm longer than the stretch of way required for an electric contact between the two horn contacts (16, 26), preferably wherein at least one of the two horn contacts (16, 26) includes a horn contact plate (16a) that is displaceable or movable in the hooting direction (H) by this distance.

4. The connector component (1) according to claim 1, 2 or 3, **characterized in that** for provision of a snap-fit connection movable in the hooting direction (H) between the module-side part (20) and the steering wheel-side part (10), one of the parts (10, 20) includes snap hooks (15) and the other part (20) includes corresponding snap recesses (24).

5. The connector component (1) according to any one of the preceding claims, **characterized in that** the guiding device includes a positioning pin (12) formed integrally with the steering wheel-side part (10) and extending through the module-side part (20), wherein the positioning pin (12) has a cross profile with a profile width of the cross profile being larger than a profile height of the cross profile, wherein preferably the positioning pin (12) extends through a biasing means (14) disposed in a tensioning means seat (13) of the steering wheel-side part (10).

6. The connector component (1) according to any one of the preceding claims, **characterized in that** the electric contacts are arranged between side walls (23) of the module-side part (20), wherein preferably the guiding device comprises the side walls (23) of the module-side part (20), wherein in the idle position the side walls (23) at least partially overlap or encompass the steering wheel-side part (10) so that the steering wheel-side part (10) is guided between the side walls (23).

7. The connector component (1) according to any one of the preceding claims, **characterized in that** the shape of the profile lug (3) essentially corresponds to a four-sided prism, wherein a gradient of the exactly two opposite sides of the prism is bigger in the region of the basis than in the region of the tip, wherein the other two opposite sides of the profile lug (3) have a constant gradient.

8. The connector component (1) according to any one of the preceding claims, **characterized in that** the module-side part (20) and the steering wheel-side part (10) are connected by snap-fit, the steering wheel-side part (10) including snap hooks (15) engaging in snap recesses (24) of the module-side part (20), especially of the side walls (23) of the module-side part (20).

9. A set comprising a connector component (1) according to any one of the claims 1 to 8 and a positioning sleeve (30, 2) adapted to be tightly connected to an airbag module (50) or adapted to be integrated in an airbag module (50) in one piece and having an inner contour which is shaped and/or dimensioned for engagement free from play of the profile lug (3) of the connector component (1) according to any one of the claims 1 to 8.

10. Use of a connector component (1) according to any one of the claims 1 to 8 or of a set according to claim 9 for connecting different steering wheels (40) to different airbag modules (50).

11. A steering wheel (40) comprising at least one connector component (1) according to any one of the claims 1 to 8, **characterized by** a steering wheel armature (43) and a steering wheel foam coating (41), wherein the steering wheel-side part (10), especially an anchoring element (11) of the steering wheel-side part (10), is embedded at least partially in the steering wheel foam coating (41).

12. An airbag module (50) comprising at least one set according to claim 9, **characterized in that** at least two positioning sleeves (30, 2) are provided at the airbag module (50), which are preferably twisted relative to each other by 90°.

13. A steering wheel assembly comprising a steering wheel (40) according to claim 11 and an airbag module (50) according to claim 12, **characterized in that** the airbag module (50) includes at least two, especially three positioning sleeves (2), which are positively connected to at least two, especially three connector components (1) fixed to the steering wheel (40).

14. A method of manufacturing a steering wheel assembly according to claim 13, comprising the steps of:
- providing a steering wheel armature (43);
- foam-coating the steering wheel armature (43) for forming a steering wheel (40) including a steering wheel foam coating (41);
- fixing at least two connector components (1) according to any one of the claims 1 to 8 in the steering wheel foam coating (41);
- providing an airbag module (50) including at least two positioning sleeves (2); and
- connecting the positioning sleeves (2) by snap-fit to module-side parts (20) of the connector components (1) for fixing the airbag module (50) to the steering wheel (40).

## Revendications

1. Composant de connexion (1) pour la fixation d'un module airbag (50) sur un volant de direction (40) avec
une partie côté volant de direction (10) et
une partie côté module (20),
qui sont mobiles l'une par rapport à l'autre et précontraintes l'une par rapport à l'autre, de telle sorte que la partie côté module (20), dans une position de repos, est espacée de la partie côté volant de direction (10) dans une direction d'avertissement sonore (H) et peut être déplacée dans une position d'avertissement sonore dans laquelle la partie côté module (20) touche la partie côté volant (10),
pour lequel la partie côté module (20) et la partie côté volant (10) sont reliées entre elles et forment un composant multifonctionnel, lequel présente un dispositif de guidage pour le mouvement guidé de la partie côté module (20) de la position de repos à la position d'avertissement sonore et des contacts électriques pour un circuit électrique de l'avertisseur sonore,
pour lequel les contacts électriques se touchent dans la position d'avertissement sonore,
**caractérisé en ce que** une protrusion (3) est prévue sur la partie côté module (20) pour le positionnement du composant de connexion (1) sur un module airbag (50),pour lequel la forme de la protrusion (3) correspond essentiellement à un prisme à quatre côtés, dans lequel, sur au moins deux des côtés opposés, le pas respectif est plus grande dans la zone de la base que dans la zone de la pointe,
pour lequel une extrémité libre de la protrusion (3), opposée à la partie côté module (20), au niveau de laquelle les côtés du prisme à quatre côtés se rejoignent, est arrondie et, en outre, les arêtes entre les côtés du prisme à quatre côtés sont également arrondies.

2. Composant de connexion (1) selon la revendication 1, **caractérisé en ce que** la partie côté volant de direction (10) présente au moins un élément d'ancrage (11, 11a, 11b) pour la fixation dans un gainage de volant de direction (41), qui présente en particulier des crochets (18a) pour cette fixation, pour lequel l'élément d'ancrage (11) présente de préférence deux éléments partiels d'ancrage (11a, 11b), lesquels présentent chacun des crochets (18a), uniquement sur des côtés extérieurs, qui ne sont pas orientés l'un vers l'autre.

3. Composant de connexion (1) selon la revendication 1 ou 2, **caractérisé en ce que** les contacts électriques comprennent un premier contact d'avertisseur sonore (16) et un deuxième contact d'avertisseur sonore (26), pour lequel le premier contact d'avertisseur sonore (16) est disposé sur la partie côté volant de direction (10) et le deuxième contact d'avertisseur sonore (26) est disposé sur la partie côté module (20), et pour lequel au moins l'un des deux contacts d'avertisseur sonore (16, 26) peut être déplacé dans une direction d'avertisseur sonore (H) d'une distance, qui est suffisamment grande, pour permettre un enclenchement de la partie côté module (20) avec la partie côté volant de direction (10), et notamment au moins 1 mm, de préférence 2 mm, en particulier 3 mm, de plus que la course nécessaire pour fermer un contact électrique entre les deux contacts d'avertisseur sonore (16, 26), pour lequel de préférence au moins l'un des deux contacts d'avertisseur sonore (16, 26) présente une plaque de contact d'avertisseur sonore (16a) qui peut être déplacée ou déviée de ladite course dans la direction de klaxon (H).

4. Composant de connexion (1) selon la revendication 1, 2 ou 3, **caractérisé en ce que**, pour créer une liaison par encliquetage mobile dans la direction d'avertissement sonore (H) entre la partie côté module (20) et la partie côté volant de direction (10), des crochets d'encliquetage (15) sont formés sur l'une des parties (10, 20) et des évidements d'encliquetage (24) correspondants sur l'autre partie (20).

5. Composant de connexion (1) selon l'une quelconque des revendications précédentes, **caractérisé en ce que** le moyen de guidage comprend une tige de positionnement (12), laquelle est formée d'un seul tenant avec la partie côté volant de direction (10) et qui s'étend à travers la partie côté module (20), pour lequel, de préférence, la tige de positionnement (12) présente un profil en croix, pour lequel une largeur du profil en croix est supérieure à une hauteur du profil en croix, pour lequel, de préférence, la tige de positionnement (12) s'étend à travers un moyen de précontrainte (14) qui est disposé dans un logement de moyen de précontrainte (13) de la partie côté volant de direction (10).

6. Composant de connexion (1) selon l'une quelconque des revendications précédentes, **caractérisé en ce que** les contacts électriques sont disposés entre des parois latérales (23) de la partie côté module (20), pour lequel, de préférence, le dispositif de guidage comprend les parois latérales (23) de la partie côté module (20), pour lequel les parois latérales (23) chevauchent ou entourent au moins partiellement la partie côté volant de direction (10) dans la position de repos de telle sorte que la partie côté volant de direction (10) est guidée entre les parois latérales (23).

7. Composant de connexion (1) selon l'une des revendications précédentes, **caractérisé en ce que** la forme de la protrusion (3) correspond essentiellement à un prisme à quatre côtés, dans lequel, sur exactement deux des côtés opposés l'un à l'autre, le pas respectif est plus grand dans la zone de la base que dans la zone de la pointe, pour lequel les deux autres côtés opposés l'un à l'autre de la protrusion (3) présentent un pas constant.

8. Composant de connexion (1) selon l'une des revendications précédentes, **caractérisé en ce que** la partie côté module (20) et la partie côté volant de direction (10) sont reliées par encliquetage, pour lequel la partie côté volant de direction (10) présentent des crochets d'encliquetage (15), lesquels s'engagent dans des évidements d'encliquetage (24) de la partie côté module (20), en particulier des parois latérales (23) de la partie côté module (20).

9. Ensemble comprenant un composant de connexion (1) selon l'une des revendications 1 à 8 et une douille de positionnement (30, 2) qui peut être reliée de manière fixe à un module airbag (50) ou peut être intégrée d'un seul tenant dans un module airbag (50) et qui présente un contour intérieur, lequel est formé et/ou dimensionné pour l'engagement sans jeu de la protrusion (3) du composant de connexion (1) selon l'une des revendications 1 à 8.

10. Utilisation d'un composant de connexion (1) selon l'une des revendications 1 à 8 ou d'un ensemble selon la revendication 9 pour relier différents volants de direction (40) à différents modules airbag (50).

11. Volant de direction (40) comprenant au moins un élément de connexion (1) selon l'une des revendications 1 à 8, **caractérisé par** une armature de volant de direction (43) et un gainage de volant de direction (41), pour lequel la partie côté volant de direction (10), en particulier un élément d'ancrage (11) de la partie côté volant de direction (10), est au moins partiellement noyé dans le gainage du volant de direction (41).

12. Module airbag (50) avec au moins un ensemble selon la revendication 9, **caractérisé en ce qu'**il est prévu sur le module airbag (50) au moins deux douilles de positionnement (30, 2) qui sont disposées de préférence respectivement tournées de 90° l'une par rapport à l'autre.

13. Ensemble de volant de direction comprenant un volant de direction (40) selon la revendication 11 et un module airbag (50) selon la revendication 12, **caractérisé en ce que** le module airbag (50) présente au moins deux, en particulier trois, douilles de positionnement (2) qui sont reliées par complémentarité de forme à au moins deux, en particulier trois, composants de liaison (1) fixés au volant de direction (40).

14. Procédé de fabrication d'un ensemble de volant de direction selon la revendication 13, comprenant les étapes suivantes :
- Mettre à disposition une armature de volant de direction (43);
- Gainer de mousse l'armature de volant (43) pour former un volant (40) avec un gainage de volant (41) ;
- Fixer au moins deux composants de connexion (1) selon l'une des revendications 1 à 8 dans le gainage du volant de direction (41) ;
- mettre à disposition un module airbag (50) avec au moins deux douilles de positionnement (2) ; et
- assembler par encliquetage les douilles de positionnement (2) avec des parties côté module (20) des éléments de connexion (1) pour la fixation du module airbag (50) sur le volant de direction (40).
